Europäisches Patentamt

European Patent Office

Office européen des brevets

(19)

(11) Numéro de publication: **0 203 401**
**A1**

## DEMANDE DE BREVET EUROPEEN

(12)

(21) Numéro de dépôt: 86105895.6

(22) Date de dépôt: 29.04.86

(51) Int. Cl.⁴: **G 10 L 5/06**

(30) Priorité: 03.05.85 FR 8506743

(43) Date de publication de la demande: 03.12.86
Bulletin 86/49

(84) Etats contractants désignés: BE CH DE FR GB IT LI NL SE

(71) Demandeur: **LA TELEPHONIE INDUSTRIELLE ET COMMERCIALE TELIC ALCATEL Société Anonyme dite:, 206 Route de Colmar, F-67023 Strasbourg Cedex (FR)**
Demandeur: **COMMISSARIAT A L'ENERGIE ATOMIQUE, 29-31, rue de la Fédération, F-75015 Paris (FR)**

(72) Inventeur: **Chaze, Charles, Le Village Magny-les-Hameaux, F-78470 Saint-Rémy-les-Chevreuse (FR)**
Inventeur: **Dupeyrat, Benoît, 5 Square Montpensier, F-91380 Chilly Mazarin (FR)**
Inventeur: **Fridisch, Marc, 1 rue Alphonse Adam, F-67300 Schiltigheim (FR)**
Inventeur: **Lipsyc, Alain, 2 rue Beethoven, F-67000 Strasbourg (FR)**
Inventeur: **Tual, Daniel, 37 rue de la Citadelle, F-94110 Arcueil (FR)**

(74) Mandataire: **Weinmiller, Jürgen et al, Lennéstrasse 9, D-8133 Feldafing (DE)**

(54) Procédé et dispositif de commande de processus par voie sonore.

(57) L'invention concerne un procédé de commande de processus par voie sonore au moyen de messages sonores isolés préalablement mémorisés par les locuteurs habilités à commander ces processus, ainsi qu'une des formes correspondantes de dispositif de commande par voie sonore.

Le dispositif (1) de commande par voie sonore d'un appareillage (2) assure au moyen d'un codeur analogique-numérique (13) le codage MIC des signaux sonores reçus par un microphone 11. Un microprocesseur (15) assure la recherche des signaux sonores susceptibles de correspondre à un message sonore de commande et le transcodage des signaux échantillonnés MIC en mots d'extrema; il comptabilise sous forme d'histogrammes, successivement établis pour une succession de fenêtres temporelles prises au long d'une suite de signaux reçus, les laps de temps entre extrema par fenêtre et en déduit une forme de référence pour cette suite. Les commandes relatives aux messages sonores mémorisés sont sélectivement déclenchées à reconnaissance d'une forme de référence correspondant à une forme de référence mémorisée.

0203401

8610589 6

## Procédé et dispositif de commande de processus par voie sonore

La présente invention a pour objet un procédé et un dispositif de commande de processus par voie sonore et en particulier au moyen de la parole.

Depuis longtemps sont reconnus les avantages que sont susceptibles d'apporter les procédés et les dispositifs permettant à leurs utilisateurs de commander par des messages sonores spécifiques le fonctionnement d'appareils selon des processus déterminés à l'avance.

En particulier, lorsque ces procédés et dispositifs se combinent ou se substituent aux classiques moyens manuels de commande, ils soulagent d'autant leurs opérateurs qui peuvent par exemple effectuer dans de meilleures conditions leurs travaux habituels ou encore réaliser des tâches qu'ils n'auraient pu réaliser autrement.

Ce soulagement, particulièrement important pour des opérateurs d'appareils qui exigent des manoeuvres quasi-simultanées ou pour des handicapés physiques, est également très apprécié par tout utilisateur auquel il évite une manoeuvre utile, mais parfois fastidieuse ou peu pratique.

Ainsi selon cette dernière hypothèse, l'établissement d'une communication téléphonique par l'intermédiaire d'un poste téléphonique à cadran ou à clavier implique des manoeuvres fastidieuses et sujettes à erreurs lorsqu'elles sont répétées ou peu commodes à réaliser, par exemple lorsque le poste téléphonique est dans un environnement encombré.

Les dispositifs de commande par voie sonore présentent aussi l'avantage de ne pas nécessiter de contact physique entre l'utilisateur et l'appareil qu'il commande, ce qui accessoirement protège l'un de l'autre.

Toutefois jusqu'à présent ces procédés et dispositifs de commande de processus par voie sonore sont encore peu développés pour diverses raisons liées notamment à leur coût et à la complexité des moyens jusqu'ici mis en oeuvre.

En particulier, ces commandes par messages sonores convenus exigent une mémorisation préalable des messages par le dispositif de commande qui compare tout ce qu'il reçoit, sous forme sonore, avec ce qu'il a mémorisé et qui traduit par une commande de processus spécifique tout ensemble de signaux reçus correspondant à un message sonore mémorisé.

Dans la mesure, où les messages mémorisés doivent être conservés de manière permanente et où ils doivent être comparés aux signaux reçus, il est avantageux de les transcrire sour forme numérique afin de faciliter leur conservation, notamment dans des mémoires électroniques, et leur manipulation par processeur numérique. Toutefois, les capacités nécessaires de mémoire et les temps nécessaires de calcul augmentent très rapidement avec la longueur et le nombre des messages mémorisés, ce qui a longtemps limité le développement. En particulier la puissance et donc le coût des processeurs nécessaires a été un frein.

De plus, la mémorisation des messages sonores convenus doit s'effectuer sous forme semi-permanente, si l'on veut laisser à l'utilisateur la possibilité d'en modifier le contenu suivant ses besoins au cours du temps ; ceci ne peut s'effectuer sans trop de contrainte que si le dispositif de commande dispose d'une mémoire vive préférablement sauvegardée et de moyens pour permettre l'enregistrement et l'effacement de messages à la demande. Là encore, sauf arrangement particulier, le coût des mémoires vives nécessaires devient rapidement prohibitif.

Pour remédier à ces inconvénients la présente invention propose donc un procédé et un dispositif de commande par voie sonore au moyen d'un dispositif apte à reconnaître différents messages sonores préalablement mémorisés, lorsqu'il les reçoit isolément, et à commander en conséquence le fonctionnement d'un appareillage selon un processus spécifique fonction du message sonore reconnu. Selon l'invention ce procédé comporte les phases suivantes :
- codage permanent sous forme d'une succession d'échantillons MIC, des signaux sonores reçus par le dispositif ;
- détermination de la valeur moyenne de l'énergie des signaux sonores reçus, dits de bruit ambiant, en l'absence de message ;
- recherche simultanée d'une part, par mesure d'énergie, des échantillons MIC, dits énergiques, dépassant un seuil minimal d'énergie, évolutif, défini en fonction du niveau de bruit ambiant tel que déterminé ci-dessus, d'autre part, par mesure de fréquence, des échantillons MIC, dits de fricatives, correspondants à des signaux de fréquence vocale ;

- 3 - 0203401

- détermination du début, du corps et de la fin de toute suite de signaux sonores, susceptible de correspondre à un message potentiel, par prise en compte des suites d'échantillons énergiques et/ou de fricatives éventuellement mêlés d'échantillons de silence, entre deux suites d'échantillons de silence de durées minimales prédéterminées ;

- transcodage des échantillons MIC en mots d'extrema et de silence fournissant chacun, sous forme d'une information numérique, une indication de laps de temps entre deux extrema successifs des signaux sonores reçus ;

- comptabilisation sous forme d'histogrammes, successivement établis pour une succession de fenêtres temporelles de même durée au long d'une suite de signaux reçus considérée comme un éventuel message sonore, des laps de temps entre extrema classés pour chaque fenêtre temporelle en fonction de leurs durées respectives et avec des pas respectifs d'incrémentation correspondants à ces durées ;

- mémorisation temporaire de la forme de référence composée des données binaires correspondant à l'ensemble des histogrammes réalisés pour une suite de signaux reçus considérée comme un éventuel message sonore,

- comparaison dynamique, de la forme de référence temporairement mémorisée d'une suite de signaux reçus avec les formes de référence, prises une à une, des différents messages sonores préalablement mémorisés de manière permanente,

- envoi d'une information numérique de commande, spécifique, à détection d'une identité entre les formes de référence d'un message sonore de commande mémorisé et d'une suite de signaux reçus.

L'invention, ses caractéristiques et ses avantages sont précisés dans la description qui suit en liaison avec les figures référencées ci-dessous.

La figure 1 présente un schéma simplifié d'un dispositif de commande par voie sonore selon l'invention associé à un appareil commandé.

La figure 2 présente un organigramme résumant les différentes possibilités d'exploitation d'un dispositif de commande de type composeur téléphonique à commande vocale associé à un appareil de type terminal téléphonique.

Les figures 3A, 3B présentent un organigramme résumant l'automate d'acquisition de message sonore selon l'invention.

La figure 4 donne une représentation simplifiée du principe de codage par extrema.

La figure 5 présente un exemple d'histogramme.

La figure 6 présente un schéma montrant le principe de comparaison entre deux histogrammes.

La figure 7 présente un diagramme matriciel de comparaison entre deux formes de référence.

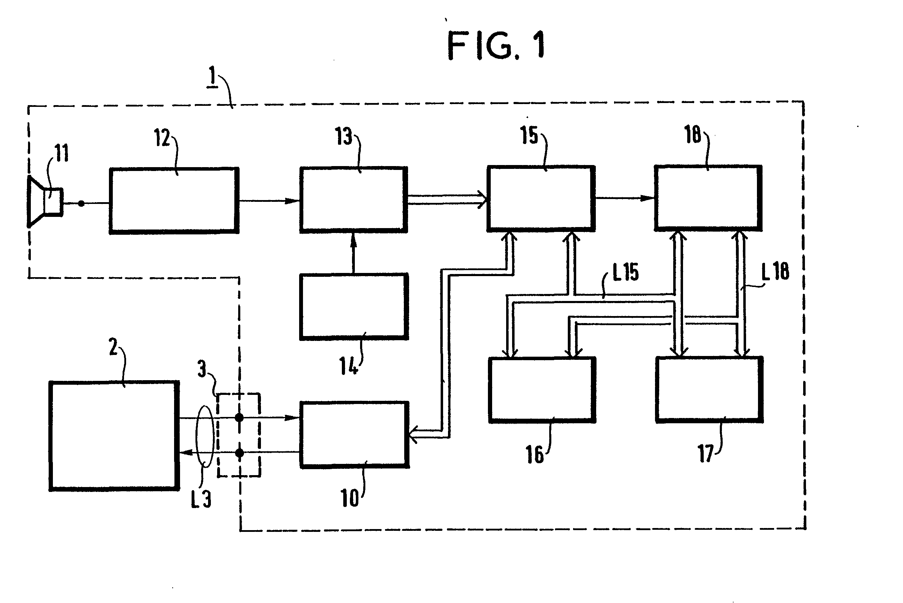

Le dispositif de commande par voie sonore 1, présenté en figure 1, est destiné à être associé à un appareillage 2 dans le but de commander au moins partiellement le fonctionnement de cet appareillage selon des procéssus convenus à l'avance.

De nombreuses variantes de dispositifs de commande et d'appareillages sont susceptibles de mettre en oeuvre l'invention, à titre d'exemple concret on considère ici que le dispositif de commande 1 est destiné à constituer un composeur de numéros téléphoniques, apte à être commandé par voie sonore, le plus souvent par des paroles, et que l'appareillage 2 est un poste ou terminal téléphonique, par exemple un terminal d'information combinant en un même appareil, un poste téléphonique et terminal informatique à microprocesseur, écran et clavier.

Un terminal téléphonique d'information de ce type est évoqué par exemple dans l'article "Terminaux personnels d'information à usage professionnel" publié dans le numéro 1 de Mars 1984 de la revue "Commutation et Transmission". Il comporte les éléments habituels d'un poste téléphonique afin de permettre sa connexion à un réseau téléphonique par une ligne usuelle et en conséquence l'établissement de communications avec tout autre abonné dans un but de conversation ou d'échange de données. Ces opérations sont le plus souvent effectuées sous le contrôle d'une logique de gestion à microprocesseur et mémoires. Le terminal d'annuaire évoqué ci-dessus comporte également un modem lui permettant d'échanger des informations sous forme numérique, par exemple avec un serveur de données distant, via la ligne et le réseau téléphonique auxquels il est raccordé.

L'écran permet d'afficher les informations transmises ou à transmettre, via le modem, et le clavier permet d'introduire des ordres et des données à destination de la logique de gestion et éventuellement d'un abonné distant, avec lequel une communication est établie.

Le dispositif de commande 1, qui est ici un composeur téléphonique destiné à être commandé par voie sonore, est prévu pour permettre à un ou plusieurs utilisateurs habilités d'obtenir la composition du numéro d'appel de différents abonnés téléphoniques d'un réseau par simple génération de messages sonores convenus à l'avance, par exemple par simple prononciation du nom d'un de ces abonnés à proximité d'un microphone du composeur ou de l'appareil commandé. Ceci permet notamment une exploitation de type "mains libres".

En raison des innombrables possibilités de prononciation d'un même mot par des individus différents, il est nécessaire de prévoir une phase préalable d'apprentissage au cours de laquelle le dispositif de commande 1 relève au moins certaines caractéristiques essentielles d'un message sonore reçu afin d'être apte à le reconnaître, s'il est répété.

Chaque utilisateur potentiel ou locuteur doit donc mettre en oeuvre une procédure d'apprentissage lui permettant de faire connaître au dispositif de commande 1 les différents messages sonores personnalisés par l'intermédiaire desquels il veut commander l'appareillage 2.

Dans l'exemple de réalisation ici pris en compte les messages sonores peuvent être différents, similaires ou éventuellement identiques pour les divers locuteurs selon les besoins ; les répertoires respectifs des locuteurs habilités peuvent contenir par exemple des messages correspondants les uns à des noms entièrement différents, d'autres à des noms identiques différemment prononcés, d'autres encore tout à fait identiques, s'ils correspondent à des sons générés de manière toujours identique par un appareillage.

Quelle que soit l'utilisation du dispositif de commande par voie sonore 1 selon l'invention et son intégration ou non dans l'appareillage 2 qu'il commande, il comporte des moyens essentiels, partagés ou non, qui ont ici été regroupés dans le cadre 1 en figure 1.

Comme indiqué plus haut de très divers appareillages peuvent convenir, ils ont pour caractéristique commune d'être aptes à assurer le déroulement de processus déterminés à réception d'ordres individualisés provenant, usuellement sous forme de données numériques, des dispositifs de commande 1 auxquels ils sont soumis, au moins partiellement, lorsque ces dispositifs reçoivent l'un des messages sonores qu'ils sont aptes à reconnaître.

De manière habituelle les données numériques, échangées entre un dispositif de commande par voie sonore et un appareil transitent par des liaisons filaires directes, lorsque le dispositif de commande est intégré à l'appareil qu'il dessert ou qu'il est accolé ou relié à lui par un connecteur, tel que 3, et éventuellement un câble de liaison, ici symbolisé par L3. Une liaison sans fil par l'intermédiaire d'émetteurs et de récepteurs accordés est bien entendu également envisageable.

Une interface d'adaptation 10, plus ou moins complexe est connectée, ici en extrémité de liaison L3, dans le dispositif de commande par voie sonore 1, elle assure au moins partiellement les diverses adaptations nécessaires aux échanges avec l'appareillage 2 commandé, ainsi que par exemple une protection contre les surtensions et inversions de polarité, lorsque le dispositif de commande 1 n'est pas intégré dans l'appareillage 2.

Les messages sonores, qui sont émis directement ou indirectement par les utilisateurs en vue de commander l'appareillage 2, sont reçus par l'intermédiaire d'un classique microphone 11.

Ce microphone 11 est par exemple intégré dans le dispositif de commande 1, si celui-ci est dans un boîtier indépendant, il fait éventuellement partie de l'appareillage 2, en particulier si celui-ci est un poste ou terminal téléphonique permettant la conversation ; il est éventuellement relié par fil ou voie hertzienne au dispositif de commande ou à l'appareil, si nécessaire.

Un ensemble amplificateur-filtre 12 permet d'adapter le niveau des signaux reçus du microphone 11, notamment en fonction du bruit ambiant en l'absence de message, de manière à fournir des messages de niveau acceptable à un codeur analogique-numérique 13, placé en aval. Cet ensemble amplificateur-filtre 12 est réalisé de manière usuelle par exemple au moyen d'une chaîne d'amplificateurs opérationnels permettant l'adaptation de niveau évoquée ci-dessus et une élimination des fréquences basses dues au bruit ambiant et aux phénomènes d'écho, qui sont captées par le microphone, notamment lorsque ce dernier est omnidirectionnel.

Le codeur 13 est par exemple celui d'un classique codeur-décodeur-filtre, dit COFIDEC, usuel en téléphonie, il est classiquement piloté par une base de temps 14 de manière à fournir, toutes les cent vingt cinq microsecondes, un octet d'échantillon codé MIC, selon la loi A telle que définie par l'avis G711 du CCITT.

Les échantillons issus du codeur sont fournis à la logique du dispositif de commande comprenant le plus souvent un microprocesseur 15 classiquement associé à des mémoires 16 et 17, l'une vive, l'autre morte. La mémoire vive est au moins partiellement sauvegardée en cas de coupure d'alimentation pour éviter les pertes d'informations essentielles modifiables et en particulier l'effacement involontaire des messages sonores de commande que l'on y mémorise, en vue de leur comparaison ultérieure avec les signaux sonores reçus, via le microphone, après apprentissage.

Dans l'exemple présenté, les mémoires 16 et 17 sont classiquement adressées par le microprocesseur 15, via un décodeur d'adresses 18 relié à ces mémoires par une liaison série L18, un bus de données commun L15 relie un port du microprocesseur 15, les mémoires 16, 17 et le décodeur.

D'autres ports du microprocesseur 15 relient ici ce microprocesseur à l'interface 10 et au codeur 13 pour leurs échanges de données numériques.

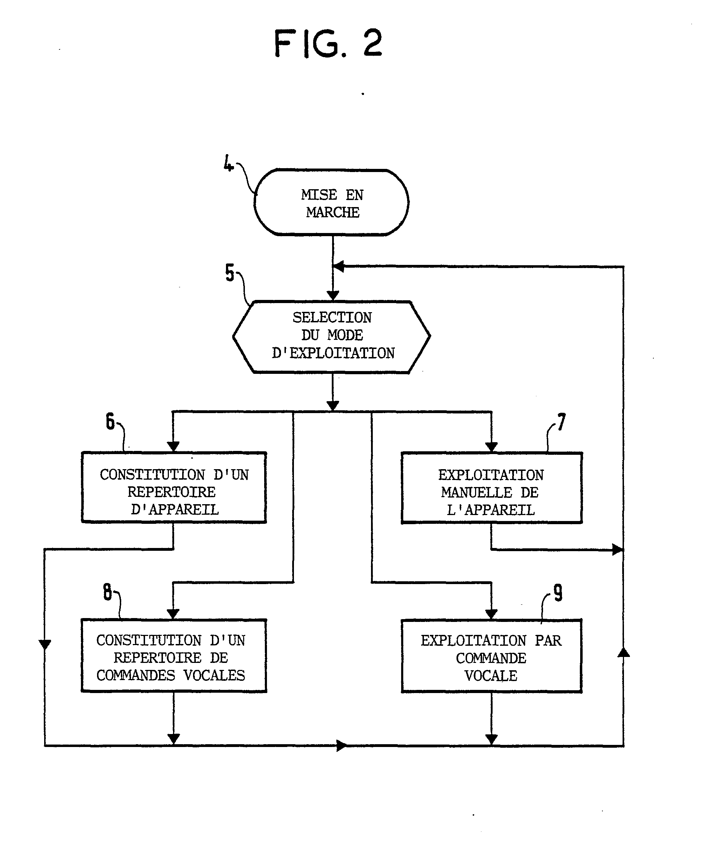

L'organigramme simplifié présenté figure 2 est relatif à un exemple d'exploitation d'un appareillage 2 commandé par un dispositif de commande par voie sonore 1, lorsque l'appareillage 2 est le terminal d'information évoqué plus haut et que le dispositif de commande 1 est le composeur téléphonique également évoqué plus haut.

D'une manière générale, après mise en marche (pavé 4) d'une part du terminal d'information, dument raccordé à une ligne téléphonique et électriquement alimenté, et d'autre part du composeur téléphonique à commande par voie sonore, quatre possibilités d'exploitation sont ici susceptibles d'être sélectionnées comme l'indique le pavé 5.

Deux exploitations sont indépendantes du composeur, ce sont les exploitations normales du terminal d'information, les deux autres concernent la commande du terminal d'information par le composeur.

Les deux premières exploitations symbolisées par les pavés 6 et 7

- 8 -                                              0203401

concernent respectivement la constitution d'un répertoire permettant de commander un classique processus d'appel d'un numéro d'abonné à partir d'un message préenregistré de type alphanumérique, et d'autre part l'ensemble des autres processus mettant en jeu le terminal téléphonique d'information sans intervention du composeur à commande par voie sonore, seule la première d'entre elles étant rappelée ici.

Pour cette exploitation, l'utilisateur mémorise un message alphanumérique en mémoire du terminal d'annuaire pour chaque numéro d'appel d'abonné téléphonique qu'il veut répertorier, afin de pouvoir déclencher l'appel des postes de ces abonnés de manière simplifiée.

Cette mise en mémoire s'effectue classiquement par tabulation du numéro d'appel et des messages correspondants sur le clavier du terminal d'annuaire, en association avec l'enfoncement de touches de fonction appropriées. Elle permet ultérieurement de rappeler de manière simple tout numéro d'appel mémorisé et/ou d'afficher sur l'écran du terminal tout ou partie du répertoire si besoin est.

Les deux autres exploitations mettent en jeu le composeur et sont respectivement liées à la composition d'un répertoire des commandes vocales 8 envisagées et à l'exploitation 9 de ce répertoire pour activer le terminal d'annuaire en fonction des commandes vocales mémorisées, elles sont développées au cours de ce qui suit.

D'une manière générale, lorsqu'un dispositif de commande par voie sonore 1 est en marche, son microphone 11 alimente son codeur 13 de manière continue et ce dernier fournit sans interruption un signal codé MIC présentent un échantillon toutes les cent vingt cinq microsecondes. Comme, ainsi qu'indiqué plus haut, la capacité de mémoire et les temps de comparaison augmentent avec la longueur et le nombre des messages, ceux-ci sont généralement de taille limitée et le nombre de locuteurs habilités est également limité. De plus le message sonore doit être produit de manière isolée, afin de permettre une bonne appréciation de son début et de sa fin.

Dans le but de limiter les volumes de données numériques correspondants respectivement aux messages mis en mémoire de manière semi-permanente et aux signaux sonores temporairement mémorisés pour être comparés, le procédé et le dispositif de commande par voie sonore selon l'invention prévoient un transcodage compressif prenant en compte l'énergie des signaux à mémoriser.

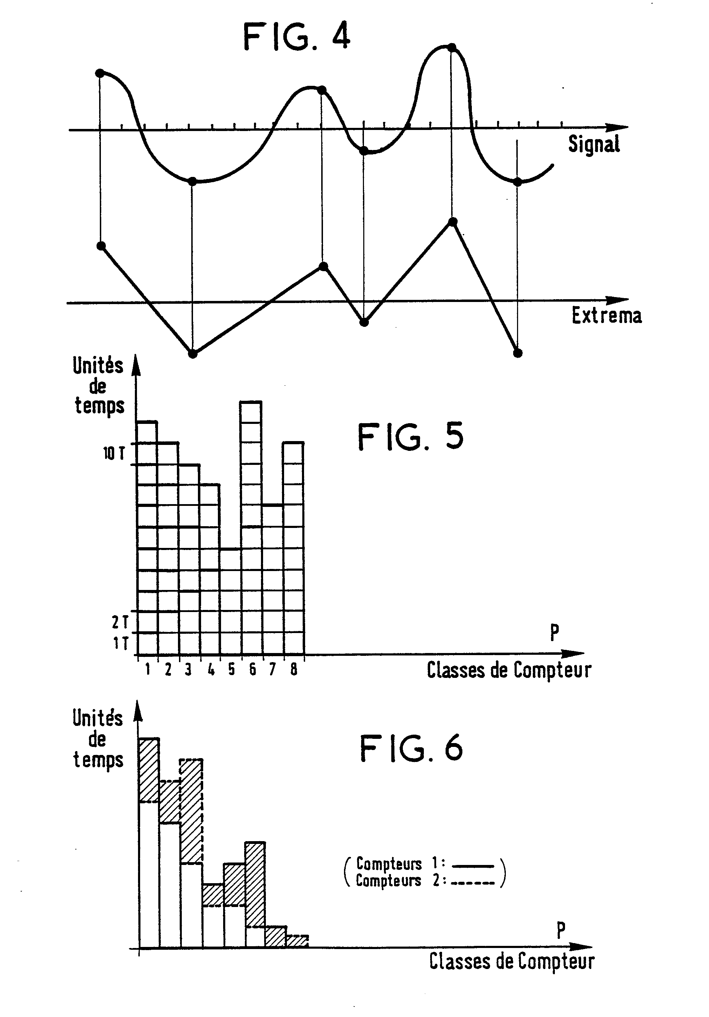

Ce transcodage est basé en premier lieu sur le procédé décrit dans le brevet français n° 2.252.799, il prend en compte l'énergie du signal initial et plus spécifiquement les valeurs des échantillons MIC correspondants aux extermas du signal recueilli par le microphone 11 (figure 4).

Les échantillons correspondants aux extremas du signal recueilli sont transcodés en mots dits d'extremum, composés chacun de deux octets dont l'un fournit une indication relative à l'amplitude de l'extremum obtenue à partir de l'échantillon correspondant, et l'autre une indication relative au laps de temps séparant cet échantillon de l'échantillon correspondant à l'extremum précédent.

Le transcodage choisi est aussi basé en second lieu sur le procédé complémentaire décrit dans la demande de brevet français n° 2545.301 permettant de. coder économiquement les silences et de déterminer un seuil de silence évolutif tenant compte du bruit ambiant, lors de la saisie des signaux sonores par le microphone 11, et du niveau du signal sonore lui-même.

Le codage des silences s'effectue à l'aide de mots de silence, éventuellement répétés, qui sont composés chacun de deux octets correspondant l'un à un descriptif spécifique de l'état de silence qui est produit lorsqu'un tel état à été reconnu et l'autre à une indication relative à la durée du silence mesurée en prenant par exemple comme unité de temps cent vingt cinq microsecondes.

Le traitement des silences du signal recueilli démarre par une opération d'acquisition exigeant préalablement la réception d'un repère de synchronisation en provenance de la base de temps 14, éventuellement via le codeur 13, pour initialiser le traitement de chaque échantillon MIC reçu de ce codeur 13.

Tout échantillon MIC acquis est soumis à une opération de comparaison de son amplitude par rapport à une valeur de consigne permettant de le classer en fonction de sa valeur par rapport au niveau pris à cet instant comme référence dans une plage d'énergie donnée.

Dans un exemple théorique comportant trois plages homothétiques d'énergie, on a donc trois valeurs de consigne de sortie et à un instant donné une seule des trois plages est considérée, c'est ce que l'on appelle la plage courante. Dans la pratique on ne considère que les amplitudes des échantillons MIC codés en loi A et l'on néglige le signe de ces échantillons ce qui revient donc à n'avoir qu'un seuil de consigne de sortie par plage au lieu de deux.

Si l'amplitude d'un échantillon acquis est inférieure au seuil de sortie en vigueur, on décrémente un compteur-décompteur borné, dit de sortie de silence, dans la mesure ou celui-ci n'est pas déjà en limite de décomptage, c'est-à-dire à zéro, et étant entendu que toute émission d'échantillons démarre classiquement par une phase de silence. Si l'amplitude d'un échantillon est supérieure à la valeur de consigne de sortie, on incrémente un compteur-décompteur de sortie de silence avec un pas d'incrémentation préférablement plus grand que le pas de décrémentation correspondant, de manière à privilégier les signaux utiles par rapport aux silences et à ne pas prendre en compte les parasites de courte durée.

Si l'incrémentation du compteur-décompteur de silence n'entraîne pas un débordement de ce compteur, on incrémente un second compteur, dit de durée de silence, qui est également incrémenté lorsqu'il y a eu une acquisition en phase de silence d'un échantillon d'amplitude inférieure à la valeur de consigne en vigueur.

Si l'incrémentation du compteur de durée de silence n'entraîne pas de débordement de ce compteur au delà d'un seuil de comptage de durée, l'opération continue en revenant à l'opération de recherche de repère de synchronisation préalable à l'acquisition d'un échantillon.

Si l'incrémentation du compteur de durée de silence entraîne un débordement au delà du seuil de comptage de durée, le microprocesseur 15 génère un mot de silence.

Suite à la production d'un tel mot de silence, le compteur de durée de silence est remis à zéro et l'opération continue en revenant à l'opération de recherche de signalisation préalable à l'acquisition d'un échantillon.

Si, suite à l'incrémentation du compteur de silence, le seuil de sortie de silence est atteint, un mot de fin de silence est généré, il se présente sous une forme analogue à celle d'un mot de silence et comprend donc un ensemble de deux octets comportant le même descripteur que pour le mot de silence et une indication de durée de silence correspondant au contenu du compteur de durée de silence. Les différents compteurs de silence sont ensuite remis à zéro.

Le traitement d'entrée en phase de silence démarre par une opération d'acquisition d'échantillon impliquant une opération de recherche d'un repère de synchronisation MIC, de même que le traitement des phases de silence établi.

Suite à cette acquisition d'échantillon, l'amplitude de ce dernier est comparée à une valeur de consigne d'entrée en phase de silence, de même que précédemment, il y a donc une valeur de consigne d'entrée pour chaque plage et la valeur prise en compte est celle de la plage courante.

Si l'amplitude de l'échantillon MIC courant n'est pas inférieure à la valeur de consigne d'entrée, on décrémente d'un pas un compteur-décompteur borné d'entrée de silence, dans la mesure où ce compteur n'est pas déjà en limite de décomptage ; l'échantillon est alors soumis à une phase de codage.

Si l'amplitude de l'échantillon MIC courant est inférieure à la valeur de consigne d'entrée, le compteur-décompteur d'entrée de silence est incrémenté avec un pas d'incrémentation inférieur au pas de décrémentation pour là encore privilégier les signaux utiles par rapport au silence.

Si le comptage d'entrée de silence ne dépasse pas une valeur de seuil d'entrée de silence, l'échantillon MIC est soumis à la phase de codage, en cas contraire cette phase est abandonnée et il y a génération d'un mot d'extremum, soit ici un octet, comportant une indication d'amplitude nulle et une indication de temps correspondant au laps de temps séparant cet échantillon de l'échantillon ayant conduit à un extremum où à un pseudo-extremum précédent, ce terme étant défini ultérieurement.

De plus on vérifie que la plage courante est identique à la plage précédente, selon un processus également évoqué plus loin de manière à générer éventuellement un mot de changement de plage. Après remise à zéro des compteurs de silence, les échantillons MIC ultérieurs seront au moins temporairement soumis non plus a ce traitement d'entrée en phase de silence, mais au traitement des phases de silence établi.

La mesure d'énergie du signal à partir des échantillons MIC a essentiellement pour but de déterminer celle des plages de codage à mettre en oeuvre pour le codage des échantillons MIC.

Cette mesure est incluse dans un traitement de choix de plage qui implique une opération d'acquisition d'échantillon MIC précédée par une opération de recherche de repère de synchronisation MIC, elle permet de déterminer la plage de codage courante des échantillons en mots d'extremum.

En ce but chaque échantillon MIC est d'une part redressé par masquage de son bit de signe, d'autre part filtré au moyen d'un filtre passe-bas qui fournit la valeur moyenne de l'énergie du signal codé. Préférablement on réalise un filtre à constante de temps suffisamment grande pour donner une valeur à long terme de l'énergie. Préférablement aussi la valeur de l'énergie doit varier assez vite à la sortie d'un silence pour éviter une correction excessive du signal.

Le filtre est donc adapté à l'amplitude du signal et possède un gain d'entrée variable, le critère d'adaptation est basé sur une comparaison du signal et de l'énergie mesurée de manière que le gain du filtre soit unitaire, lorsque l'amplitude du signal est inférieure à l'énergie mesurée et que le gain du filtre soit supérieur à l'unité, lorsque l'amplitude de ce signal est supérieure à l'énergie mesurée.

Dans une forme préféré de réalisation ce filtre passe-bas est un filtre numérique du premier ordre classiquement défini par une équation de forme $Y(z) = G . X(z) + B1 . Y(z) . z^{-1}$ dans lequel G est le gain d'entrée et B1 un coefficient de pondération de forme cosinusoïdale, fonction de la fréquence de coupure du filtre et de la fréquence d'échantillonnage.

Le contrôle du temps de réponse du filtre est réalisé par variation de son gain après comparaison de l'amplitude de l'échantillon courant avec le précédent.

Le niveau d'énergie atteint par les échantillons permet de déterminer la plage de codage des échantillons en mots d'extremum.

Dans le but d'obtenir une définition précise des amplitudes de mot d'extremum, tant pour de faibles amplitudes que pour les fortes, on prévoit plusieurs plages de codage ayant des échelles différentes et des valeurs de seuil d'entrée et de sortie de silence respectivement équivalentes ; comme on l'a vu trois plages sont mise en oeuvre dans l'exemple de réalisation évoqué.

La phase de codage des échantillons MIC en mots d'extremum comporte en premier lieu un changement de loi de conversion permettant de traduire sous forme binaire croissante, l'amplitude d'un échantillon MIC codé en loi logarithmique A.

Une seconde opération prend en compte le sens de variation des amplitudes d'échantillons successifs en vue de déterminer si l'échantillon varie dans le sens déterminé pour l'échantillon précédent de manière à détecter l'apparition d'un extremum du signal codé qui se traduit par un changement de sens de variation pour l'échantillon courant et qui indique que l'échantillon précédent correspond à un extremum de signal.

En cas de changement de sens de variation, l'amplitude de cette variation est comparée à une valeur de consigne d'amplitude courante qui est fonction de la plage de codage courante, comme les valeurs de consigne d'entrée et de sortie de silence.

Si la variation d'amplitude est supérieure à la valeur de consigne d'amplitude courante, la génération d'un mot d'extremum est amorcée.

En ce but l'amplitude de l'échantillon correspondant à l'extremum est transcodée, par l'intermédiaire de la table de codage courante, en une indication d'amplitude d'extremum destinée à s'intégrer dans un mot d'extremum.

Dans l'exemple ici décrit, ce mot d'extremum référencé M1 se présente sous forme d'un octet dont cinq bits sont affectés à l'indication d'amplitude et dont les trois autres bits sont affectés à l'indication du laps de temps séparant l'échantillon d'extremum courant, dont l'indication d'amplitude est jointe, de l'échantillon d'extremum précédent.

Ce laps de temps, est comptabilisé par un compteur de durée de mot d'extremum remis à zéro à chaque génération de mot d'extremum, ou de pseudo extremum ainsi qu'indiqué ci-dessous.

On incrémente le compteur de durée de mot d'extremum si la variation d'amplitude de l'échantillon courant par rapport à l'échantillon précédent est inférieure à la valeur de consigne d'amplitude courante, alors qu'il y a eu changement de sens de variation ; tant que le compteur n'a pas atteint un seuil de comptage déterminé ci-dessous, une phase de traitement de choix de plage est à nouveau entreprise.

Si le compteur de durée de mot d'extremum déborde au delà d'un seuil de comptage $Sm$ correspondant aux trois bits d'indication de laps de temps, la génération d'un mot d'extremum M1 est amorcée.

Si par contre la variation de l'amplitude de l'échantillon courant est dans le sens de variation déterminé pour l'échantillon précédent, le compteur de durée de mot d'extremum est incrémenté. Si dans ce dernier cas le compteur déborde au delà du seuil de comptage, la génération d'un mot de pseudo extremum est amorcée ; en cas contraire la phase de traitement de choix de plage est à nouveau entreprise après acquisition de l'échantillon MIC suivant.

La génération d'un mot d'extremum ou de pseudo extremum entraine la remise à zéro du compteur de durée d'extremum et une vérification de choix de plage comparant la plage courante déterminée par l'échantillon courant avec la plage précédente déterminée pour l'échantillon d'extremum ou de pseudo extremum qui vient d'être produit. Si la mesure d'énergie effectuée dans ces deux cas a conduit à deux plages différentes, un mot de changement de plage M2 est produit. Ce mot M2 comporte essentiellement un descripteur composé de cinq bits et une indication de changement de plage sur trois bits.

Dans le cas évoqué ci-dessus où il y a eu génération d'un mot de changement de plage M2 et dans le cas où la dernière mesure d'énergie à conduit au choix de la même plage que pour l'extremum ou le pseudo extremum précédent, un traitement de choix de plage est à nouveau entrepris pour l'échantillon suivant.

On obtient donc une succession de mots, ici de deux octets chacun, correspondants au codage des extremas et des silences du signal sonore recueilli par le microphone 11, à partir de la succession des signaux codés MIC fournis par le codeur 13.

Le procédé et le dispositif de commande par voie sonore selon l'inventionn n'ayant pour objet que la reconnaissance de certains messages sonores parmi l'ensemble des sons susceptibles d'être captés par le microphone, il n'est bien entendu pas nécessaire de pouvoir conserver les signaux recueillis au-delà du temps nécessaire à leur comparaisons, à l'exception de ceux recueillis en vue de constituer les messages sonores de commande.

Comme indiqué plus haut toute commande par voie sonore implique une prise en compte préalable des messages sonores de commande. Cette prise en compte préalable s'effectue classiquement au cours d'une phase d'apprentissage pendant laquelle le ou les locuteurs, habilités à commander par voie sonore, font individuellement connaître les messages sonores qu'ils veulent utiliser, cette phase pouvant être reprise au cours du temps selon les besoins.

Chaque message sonore est destiné à être reconnu, même dans une ambiance bruyante, lorsqu'il est prononcé de manière isolée.

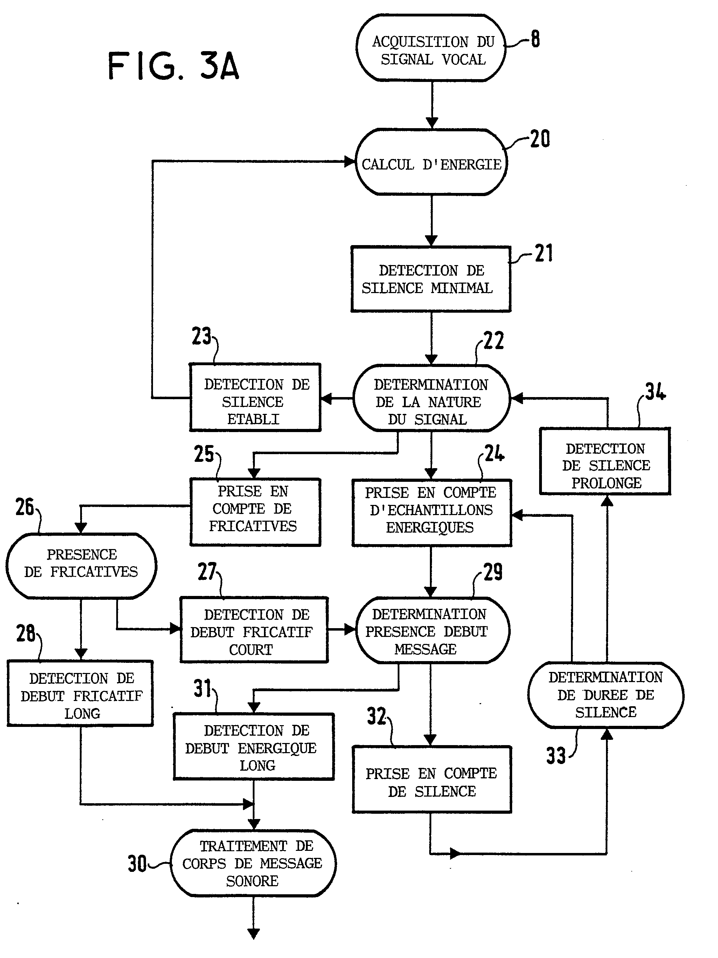

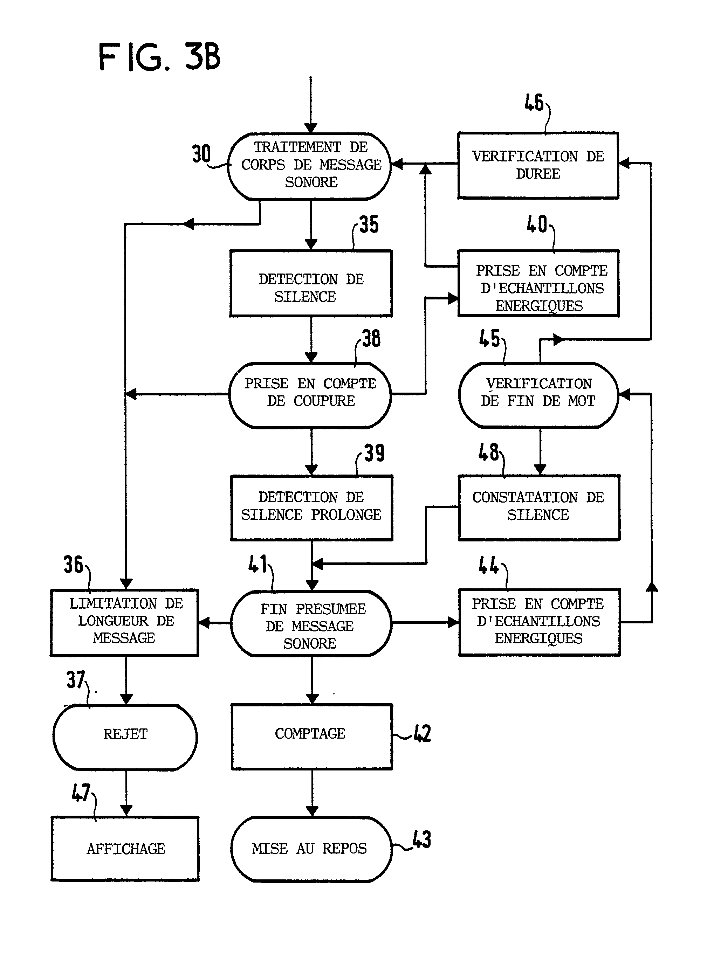

L'automate correspondant à la phase d'acquisition de message sonore en apprentissage et en reconnaissance de message est résumée par l'organigramme objet des figures 3A, 3B.

Cette phase implique la mise en oeuvre d'une pluralité de routines de traitement, elle débute à chaque enregistrement de message sonore par une détermination préalable du niveau de bruit ambiant et par conséquent des seuils choisis pour la détection des informations de message sonore, cette détermination s'effectuant à partir des échantillons MIC fournis par le codeur 13.

La routine correspondante est dite de calcul énergie, elle est symbolisée par le pavé 20 et elle permet de déterminer la plage courante et les seuils correspondants à partir d'une suite de, par exemple, 256 échantillons de bruit ambiant recueillis avant le début de l'enregistrement d'un message.

Comme indiqué plus haut, tout enregistrement proprement dit doit être précédé par une phase de silence minimale pour faciliter sa reconnaissance et notamment la détection de début de message. Un comptage permet donc de ne prendre en compte un début de message que s'il a été précédé par un temps minimal de silence préalable qui est par exemple choisi égal à trente deux millisecondes, ceci correspondant à l'opération détection de temps de silence minimal référencée 21 sur la figure 3A.

Une routine de détermination de nature de signal 22 a pour objectif de prendre en compte les silences établis par un second comptage de silence permettant de revenir en boucle à la routine de calcul d'énergie 20 lorsque la durée du silence dépasse une valeur de seuil nettement supérieure au temps minimal de silence préalable et correspondant par exemple à une seconde ; ce second comptage étant symbolisé en figure 3A par le pavé 23 intitulé détection de silence établi.

Simultanément la routine de détermination de nature de signal permet de prendre en compte tout début de message sonore intervenant après écoulement d'un temps au moins égal au temps minimal de silence préalable, cette prise en compte étant effectuée soit suite à une opération 24 de prise en compte d'échantillons énergiques, après débordement du compteur-décompteur de sortie de silence activé par l'apparition d'échantillons ayant des valeurs supérieures au seuil de sortie de silence en vigueur dans la plage courante, soit à une opération 25 de prise en compte de fricatives.

En effet, les fricatives, présentent une énergie faible qui peut être inférieure aux seuils de détection, ce qui risque de conduire à une erreur de détermination de début ou de fin de message sonore, par exemple de l'ordre de cinquante millisecondes.

Par contre ces fricatives ont un spectre riche en hautes fréquences permettant de les différencier du bruit ambiant et de les prendre en compte par détection et comptage des passages par zéro du signal recueilli. Ceci s'effectue aisément par comptage des changements de signe des échantillons MIC successivement fournis par le codeur au cours d'une fenêtre temporelle. Un seuil de détection correspondant à une fréquence moyenne minimale admissible, par exemple de 2 kHz, étant choisi et une amplitude minimale d'amplitude de variation étant fixée pour s'affranchir des erreurs de quantification dues au codeur 13.

La détection de fricatives après un temps de silence supérieur au temps minimal de silence préalable conduit à une routine confirmative de présence de fricatives 26 débouchant par comptage de durée à la différenciation des débuts fricatifs longs de message sonore de ceux qui sont considérés comme courts par deux opérations 27, 28 conduisant à des résultats différents.

La détection d'un début fricatif court 27 pour lequel la durée de présence de signal fricatif est par exemple inférieure à un seuil de quarante-huit millisecondes, conduit à une routine de détermination de la présence d'un début de message 29 à laquelle conduit également l'opération 24 ayant conduit à la prise en compte d'échantillons énergiques.

La détection d'un début fricatif long 28 pour lequel la durée de présence du signal fricatif est supérieure à la valeur de seuil mentionnée ci-dessus, conduit à une routine de traitement de corps de message sonore 30 représentée sur les deux figures 3A et 3B.

La routine de détermination de présence d'un début de message 29 permet de prendre en compte les débuts réels de message sonore par une opération de comptage de durée de présence d'échantillons énergiques au-delà d'une valeur de seuil déterminée, par exemple de l'ordre de soixante dix millisecondes, suite à la prise en compte d'un début fricatif ou énergique. Cette opération 31, dite de détection de début de message énergique long, conduit à la routine de traitement du corps du message sonore 30.

La routine de détermination de présence d'un début de message 31 permet également de prendre en compte les silences intervenant après un début fricatif ou énergique par une opération de prise en compte de silence 32 basée sur le procédé de détermination de silence décrit dans la demande de brevet français évoquée plus haut et également rappelé plus haut, de même que la routine évoquée ci-dessous. L'opération de prise en compte de silence 32 conduit à une routine de détermination de durée de silence 33 destinée à déterminer si l'on a affaire à une pause dans le message ou à un silence durable. A cet effet, soit l'apparition d'échantillons énergiques conduit à la reprise de l'opération 24 de prise en compte de ces échantillons, soit le silence se poursuit au-delà d'un seuil prédéterminé, par exemple de l'ordre de dix millisecondes, correspondant à un silence prolongé que l'on détecte par simple comptage au moyen d'une opération 34, dite de détection de silence prolongé.

Suite à une telle détection, la phase d'acquisition se poursuit par une reprise de la routine de détermination de nature de signal 22 déjà évoquée.

La routine de traitement de corps de message sonore 30 se produit tant que des échantillons énergiques et/ou des fricatives sont détectées par mise en oeuvre des procédures correspondantes évoquées plus haut et qui ne sont pas redécrites ici ; cette routine se termine si le message sonore se poursuit pendant une durée supérieure à une valeur fixée en fonction de la taille de mémoire vive prévue pour l'enregistrement permanent d'un message sonore, ou si la fin du message est détectée.

Une opération 35 de détection de silence est effectuée dans le cadre de la routine de traitement, elle est basée sur le procédé décrit dans la demande de brevet évoquée plus haut et lui même rappelé plus haut et elle n'est entreprise qu'en l'absence de fricatives.

Une opération 36 de type comptage a pour but d'arrêter la routine de traitement de message lorsque le message sonore va se poursuivre au-delà de la capacité de mémorisation nominale par message, cette opération, dite de limitation de longueur de message, conduit à une routine de rejet de message 37. Dans l'application évoquée plus haut, cette routine conduit, par une opération 47, à l'affichage sur l'écran du terminal d'information d'une indication visuelle de la raison du rejet, éventuellement en association avec le rappel du message tabulé correspondant au message sonore rejeté ; notamment si l'on admet qu'une énonciation beaucoup trop lente du message puisse conduire à un rejet d'un message de commande admissible sous forme tabulée.

La détection d'un silence par l'opération de détection 35 conduit au passage à une routine de prise en compte de coupure 38 qui détermine, par comptage de temps au moyen d'une opération 39 de détection de silence prolongé, la réalité de la coupure ou son interruption par une opération 40 de prise en compte d'échantillons énergiques. Cette dernière est analogue à l'opération 24 elle conduit à un retour à la routine de traitement de corps de message sonore 30, si des échantillons énergiques sont relevés dans les conditions évoquées plus haut.

L'opération de détection de silence prolongé est analogue à l'opération 34, elle s'effectue par comptage dans les mêmes conditions et permet de passer à une routine 41 de fin présumée de message sonore.

La détection d'un silence prolongé est obtenue par exemple après un comptage égal à un minimum par exemple de douze millisecondes ; la routine de fin présumée 41 qui en découle conduit par une ultime opération de comptage 42 à une routine de mise au repos 43 conduisant par exemple à l'enregistrement permanent en mémoire vive sauvegardée 16 du message sonore reçu ; elle conduit alternativement à une nouvelle remise en question, si des échantillons énergiques sont détectés avant la fin de ·l'ultime opération de comptage 42 par une opération 44, identique à l'opération de prise en compte 40.

En ce cas, une routine 45 de vérification de fin de mot est lancée, elle conduit alternativement à revenir à la routine de traitement de corps de message 30, via une opération 46 de vérification de durée de présence d'échantillons énergiques par un comptage à seuil sur la base de par exemple six millisecondes, ou encore à revenir à la routine de fin présumée de message sonore 41, au cas où le seuil de durée n'est point atteint.

Une opération de constatation de silence 48 est alors utilisée en ce but.

Si l'enregistrement d'un message sonore tend à devoir se poursuivre au-delà de la capacité de mémorisation prévue pour lui, au cours des routines de prise en compte de coupure 38 et de fin présumée de message sonore 41, l'opération de limitation de longueur 36 est alors également engagée et elle conduit à la routine de rejet 37.

Cette routine de rejet 37 permet à l'utilisateur de revenir en phase d'acquisition d'une manière non représentée ici, de même que la routine de mise au repos 43.

De manière constante après mise en marche du dispositif de commande par voie sonore et y compris durant la phase d'acquisition le signal codé MIC fourni par le codeur 13 est transcodé par la méthode évoquée plus haut en vue de réduire en volume les données numériques à mémoriser en phase d'apprentissage et à comparer en phase de reconnaissance de message sonore.

Dans une forme préférée de réalisation, seules sont prises en compte les données numériques correspondant aux laps de temps séparant les extremas du signal reçu en vue d'assurer un pseudo-codage en fréquence de ce signal reçu.

En ce but ledit signal est découpé en tranches temporelles, dites fenêtres de constitution d'histogrammes, qui ont même durée et qui sont préférablement chevauchantes. Dans un exemple de réalisation chaque fenêtre a une durée de cinquante millisecondes et correspond donc à 400 échantillons MIC reçus qui sont transcodés un nombre variable de mots codés d'extrema et de silence.

Dans chaque fenêtre de constitution d'histogramme les laps de temps séparant les extremas successifs, sont comptabilisés en fonction de leur durée, ils sont mesurés par des nombres égaux ou multiples à cent vingt cinq microsecondes dans l'exemple choisi.

Un histogramme est obtenu pour chaque fenêtre telle que définie ci-dessus, il correspond à la sommation par classe de durée des laps de temps entre extremas relevés pour cette fenêtre.

Dans un exemple de réalisation, la comptabilisation relative à un histogramme est réalisée à l'aide de compteurs affectés chacun à une classe différente de durée et l'incrémentation de chaque compteur s'effectue à l'occurrence de chaque extrema, avec un pas de comptage correspondant à la durée comptabilisée depuis le précédent.

Ainsi, à titre d'exemple théorique p = 7 compteurs (figure 5) sont affectés à des durées variant de une à sept unités de 125 microsecondes et sont respectivement incrémentés suivant leurs rangs respectifs de une à sept unités lors d'un comptage de laps de temps les concernant.

Cette dernière caractéristique permet de ne pas sous estimer les composantes basses fréquences du signal recueilli.

Dans l'exemple théorique considéré ci-dessus, un compteur de rang 8 est affecté à la comptabilisation des durées supérieures à la durée unitaire prise en compte par le compteur de plus haut rang, c'est-à-dire 7 unités, il comptabilise en vraie grandeur tout laps de temps supérieur à cette durée unitaire.

Un message sonore reçu par le dispositif de commande par voie sonore se traduit donc par une succession d'histogrammes correspondant à la succession de fenêtres réalisées depuis son début jusqu'à sa fin. Les nombres d'histogrammes pris en compte pour différents messages sonores sont donc à priori différents puisqu'ils varient avec les longueurs réelles des messages telles que mesurées par le dispositif de commande lors des enregistrements.

Par contre tous les histogrammes correspondent au relevé d'un même nombre de compteurs de capacités maximales données et se traduisent donc par un nombre identique de données binaires.

Ce sont les données binaires relatives aux histogrammes successifs qui sont mémorisées, soit temporairement pour les signaux recueillis par le microphone 11 en phase de reconnaissance, soit de manière permanente en phase d'apprentissage lorsqu'un message sonore de commande a été accepté.

La comparaison entre deux messages sonores, l'un enregistré de manière permanente et l'autre reçu, s'effectue par comparaison de formes de références respectives de chacun d'eux selon un processus connu, dit de comparaison dynamique, initialement décrit dans un article publié par Mrs SAKOE et CHIBA en Février 1978 dans la revue IEEE/TRANS. La forme de référence d'un message est constituée par la succession des histogrammes relevés au cours de ce message.

Un premier élément de comparaison pris en compte est du au fait que, si le nombre d'histogrammes d'une forme de référence diffère fortement de celui d'une autre forme de référence, celles-ci ne peuvent manifestement pas correspondre au même message sonore. Ceci permet de ne prendre en compte, en phase de comparaison, que les formes de référence ayant au moins approximativement le même nombre d'histogrammes et d'éliminer toutes les autres.

Dans les autres cas, il est nécessaire d'examiner la distance existant entre deux formes de référence, à partir des distances entre histogrammes supposés correspondants.

La distance entre deux histogrammes est obtenue en prenant en compte la somme des portions non communes des deux histogrammes représentée par des zones hachurées sur la figure 6 réalisée à une échelle d'ordonnées différente de la figure 5. La distance entre deux formes de référence est elle même constituée par la somme des n distances des n histogrammes de l'une avec les n histogrammes de l'autre que l'on définit par la formule suivante :

$$D_{12} = D_{21} = \sum_{j=1}^{n} \sum_{i=1}^{n} \left| h_{ij1} - h_{ij2} \right|$$

dans lequel $D_{12}$ et $D_{21}$ sont les distances respectives des deux formes de référence, n est le nombre d'histogrammes supposé égal pour les deux

formes et $h_{ij}$ les distances entre canaux correspondants des histogrammes de même rang dans leurs formes respectives.

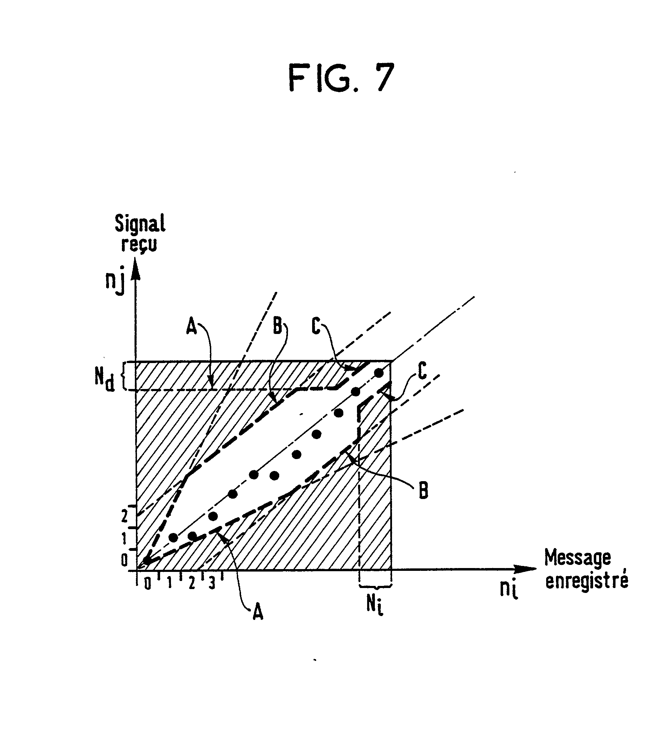

La comparaison s'effectue donc histogramme par histogramme entre un signal sonore reçu, brièvement mémorisé, et un message sonore enregistré. Les différentes étapes de cette comparaison peuvent être symbolisées par une représentation matricielle plane, telle que présentée figure 7, sur laquelle on a fait figurer en abscisse les histogrammes du message sonore et en ordonnée les histogrammes du signal sonore supposé identique.

Idéalement, la forme de référence d'un signal sonore identique à un message sonore de commande enregistré devrait comporter le même nombre d'histogrammes, les histogrammes de même rang chronologique seraient identiques, leur distance serait nulle de même que celle des deux formes de référence ; le déplacement du premier histogramme au dernier histogramme de chaque forme de référence pourrait être figurée par la diagonale d'un carré qui partirait de la case de rang (0, 0) pour aller à une case de rang $n_i$, $n_j = n_i$ sur la figure 7.

Pratiquement, pour des raisons liées au locuteur et au dispositif de commande, le signal sonore correspondant à la prononciation d'un message sonore de commande ne comporte pas toujours le même nombre d'histogrammes que ledit message sonore tel qu'enregistré, ainsi que le symbolise la figure 7.

En conséquence la distance entre les deux formes de référence correspondantes n'est pas obtenue en faisant la somme des distances entre histogrammes correspondants, puisque la correspondance n'est pas totale.

La distance entre deux formes de référence doit donc être définie à partir d'un ensemble de distances entre histogrammes correspondants, tel que, faute de pouvoir obtenir que les distances soient nulles ce qui correspondrait à un signal sonore identique en tout point au message enregistré, elles soient au moins minimales lorsqu'elles ne peuvent être nulles pour les différentes paires d'histogrammes appartenant respectivement l'un au signal, l'autre au message.

On détermine donc, à chaque étape de comparaison, si l'histogramme pris en compte du signal sonore reçu est à distance raisonnable d'un histogramme du message sonore auquel il est comparé, afin de décider si ce signal reçu correspond ou non au message sonore considéré.

Idéalement la comparaison d'un signal sonore reçu à un message sonore enregistré implique une distance nulle entre le premier histogramme du message de commande sonore enregistré de manière permanente et celui du signal reçu.

En ce but, le signal sonore reçu par le microphone 11 est soumis au traitement d'acquisition décrit en liaison avec la phase d'apprentissage. Ce traitement permet de ne prendre en compte que les parties du signal fourni de manière continue par le microphone, qui sont susceptibles de correspondre à un message sonore de commande de par leur constitution générale ; il permet également de déterminer les débuts de message sonore et par conséquent le premier histogramme, pris en compte pour un signal sonore reçu, susceptible d'être un message de commande.

En raison de l'incertitude éventuelle concernant l'exactitude du choix du premier histogramme à prendre en compte dans un signal reçu par rapport au message enregistré, on recherche à déterminer si l'un des premiers histogrammes successivement reçus est à distance admissible d'un des premiers histogrammes du message sonore de commande enregistré.

On détermine aussi la compatibilité des deux formes de référence à comparer en déterminant également au moins la distance entre les histogrammes de rangs respectifs $N_j$, $N_i$ de fin de message sonore de commande enregistré et du signal sonore susceptible d'être un message de commande.

S'il y a compatibilité a ce niveau, on vérifie la compatibilité des deux formes de référence à partir des deux histogrammes l'un de signal, l'autre de message enregistré qui sont situés à distance admissible et qui représentent la case de départ de rang $n_i = 0$, $n_j = 0$ du diagramme matriciel présenté figure 7.

La vérification de compatibilité des formes s'effectue par étapes, chacune de ces dernières permettant de déterminer quel est le point suivant le plus probable sur le chemin conduisant à la case finale de rang $N_i$, $N_j$, à partir d'une case de matrice de rang $n_i$, $n_j$ reconnu comme correspondant à deux histogrammes situés à distance admissible.

On rappelle ici que la case à déterminer, qui suit une case de rang $n_i$, $n_j$ déterminée par un histogramme de signal de rang j et un histogramme de message enregistré de rang i sur la figure 7, ne peut être que l'une des cases de rang $n_i + 1$, $n_j + 1$, ou de rang $n_i + 1$, $n_j + 2$ ou encore $n_i + 2$, $n_j + 1$ pour que les histogrammes correspondants soient à distance admissible. Ceci implique les contraintes dites de pente, référencées A sur la figure 7, qui permettent de considérer comme dissemblables deux formes de référence dont les histogrammes successifs ne respectent pas les conditions rappelées ci-dessus.

De même le chemin idéal entre la case de rang 0, 0 à la case de rang $n_i$, $n_j$ est la diagonale joignant ces deux cases et les cases du chemin réel ne peuvent bien entendu s'écarter de part et d'autre de cette diagonale au-delà d'une zone, dite d'ajustement, limitée par deux parallèles à la diagonale qui sont ici référencées B et qui correspondent donc au décalage maximal en rang de deux histogrammes situés à distance admissible l'un de l'autre.

En dernier lieu il faut également tenir compte d'une contrainte d'arrivée qui limite la distance en nombre d'histogrammes entre le point d'arrivée théorique de rang $N_i$, $N_j$ et le point d'arrivée obtenu en fin du chemin établi, tel que figuré par les points correspondants aux cases définies par les couples d'histogrammes situés à des distances admissibles l'une de l'autre et à partir du couple correspondant à la case précédente.

La dernière case du chemin établi est celle qui associe, en un couple d'histogrammes situés à distance admissible, le dernier histogramme de l'une des formes de référence avec l'un des derniers histogrammes de l'autre.

Il est également nécessaire de rejeter comme dissemblables deux formes de référence dont le chemin établi a pour dernière case une case située à une distance horizontale ou verticale supérieure à une valeur prédéterminée, ce qu'indique les limites référencées C. Ces dernières bordent avec les références A et B un secteur fermé, représenté non hachuré, qui délimite les possibilités de variation de positionnement existantes entre histogrammes situés à distance admissible.

En cas de rejet d'un chemin et lorsqu'un choix antérieur entre des solutions possibles à dû être fait, le processus de détermination est susceptible d'être repris à une étape antérieure, de manière à voir si

0203401

l'une de ses solutions non retenues ne conduit pas à un chemin convenable et donc à une reconnaissance effective du message sonore de commande enregistré dans le signal sonore reçu.

Il est également prévu en cours d'apprentissage d'affiner les résultats obtenus lors de la prise en compte d'un message sonore de commande en permettant au locuteur concerné de répéter ce message plusieurs fois, par exemple cinq, de manière à définir un enregistrement correspondant au chemin le plus probable vu à partir de ces répétitions du même message, de manière à faciliter les reconnaissances ultérieures.

Pratiquement ceci se traduit pour l'utilisateur de la manière brièvement évoquée ci-dessous, en liaison avec l'appareillage évoqué plus haut à titre d'exemple associant un dispositif de commande 1 de type composeur vocal de numéros téléphoniques et un appareil de type terminal d'informations.

Dans une forme non exclusive de réalisation où le terminal d'information permet la constitution d'un répertoire de numéro d'appel téléphonique introduits par tabulation du clavier, le composeur vocal mémorise des messages sonores spécifiques pour permettre d'appeler chacun de ces numéros.

Lors de la constitution simultanée ou séparée de chacun de ses répertoires, l'utilisateur concerné introduit préalablement dans un terminal par une procédure adéquate dans une mémoire sauvegardée du terminal, chaque numéro d'appel téléphonique et le court mot de code alphanumérique permettant de l'obtenir par un processus accéléré. Ce mot de code correspond à une information numérique de commande qui déclenche l'envoi du numéro d'appel correspondant lorsqu'elle est tabulée sur le clavier du terminal.

Lors de la constitution du répertoire vocal, l'utilisateur prononce, à proximité du microphone 11, le message sonore par lequel il veut obtenir l'envoi d'un numéro d'appel et par exemple le mot de code déjà utilisé pour le processus d'envoi accéléré au moyen du clavier. Si ce message sonore est accepté par le composeur, celui-ci enregistre en mémoire sauvegardée 16 la forme de référence correspondante ainsi que l'information numérique de commande qui est utilisée dans le terminal pour ce mot.

Il est alors possible de commander l'envoi d'un numéro d'appel par le terminal par tabulation ou par commande vocale, l'information numérique étant susceptible d'être transmise au microprocesseur de gestion de ce terminal soit par le clavier, soit par le microprocesseur 15 du composeur vocal associé et relié à lui.

La constitution des répertoires s'effectue donc par étape pour chaque commande différente tant en mode tabulé qu'en mode vocal.

Lors de ce dernier, chaque message sonore de commande, préférablement répété en phase d'apprentissage comme indiqué plus haut, est également comparé aux messages sonores de commande préalablement enregistrés de manière à déceler dès l'origine les messages suffisamment voisins pour être susceptibles de créer des confusions entre commande.

Cette comparaison s'effectue, pour l'essentiel, selon la procédure mise en oeuvre en phase de reconnaissance d'un message de commande telle qu'évoquée plus haut. Elle se traduit dans le cas de l'application déjà décrite plus haut par l'affichage sur l'écran du terminal du ou des messages sonores susceptibles d'être confondus avec le message sonore que l'utilisateur désire introduire, de manière à lui permettre d'effectuer un choix en connaissance de cause.

D'une manière préférée, l'acceptation d'un message sonore de commande doit être validée pour être prise en compte et le terminal affiche un message d'invitation à valider par l'intermédiaire par exemple d'une des touches de fonction de son clavier qui entraîne l'envoi d'une information numérique de validation au microprocesseur 15 du composeur via la liaison L3.

Il doit être noté à ce sujet que la commande des fonctions normalement obtenues par manipulation des touches de fonction du terminal est également susceptible d'être obtenue par voie sonore comme pour un numéro d'appel ; ceci permet en particulier un dialogue vocal avec un serveur distant pour les commandes mises à disposition des utilisateurs par le serveur.

Il est également prévu de disposer de messages sonores formant clef, un tel message clef verrouille par exemple l'accès à un répertoire de messages sonores de commande tant qu'il n'a pas été prononcé préalablement à l'un d'entre eux. La procédure de mise en oeuvre de tels messages sonores formant clef est identique à celle des autres messages sonores. Ceci permet en particulier d'éviter le déclenchement d'une commande par le message sonore correspondant lorsque celui-ci est prononcé involontairement dans une conversation hors du contexte de commande.

La procédure de commande à l'aide de messages clefs permet également d'accéder à un répertoire de messages sonores de commande pour une application particulière donnée et donc de déclencher un processus déterminé dans le cadre de cette application.

Ceci permet de substituer des commandes par messages sonores spécialisés aux commandes particulières qui sont exigées par les serveurs de données et que l'utilisateur doit normalement produire à l'aide des touches alphanumériques ou de fonction du clavier.

Deux phases de reconnaissance successives sont alors nécessaires pour l'envoi d'au moins certaines informations numériques de commande. La première phase correspond à la reconnaissance du message clef d'accès, la ou les phases de reconnaissance des messages sonores suivants assurent l'envoi d'autant d'informations numériques de commande prédéterminées.

Ceci permet en particulier à un locuteur de sélectionner un répertoire parmi plusieurs ou à plusieurs locuteurs de sélectionner indépendamment chacun leur répertoire de commande à l'aide du même dispositif.

REVENDICATIONS

1/ Procédé de commande de processus par voie sonore au moyen d'un dispositif (1) apte à reconnaître différents messages sonores préalablement mémorisés, lorsqu'il les reçoit isolément, et à commander en conséquence le fonctionnement d'un appareillage (2) selon un processus spécifique fonction du message sonore reconnu, caractérisé en ce qu'il comporte les phases suivantes :

- codage permanent sous forme d'une succession d'échantillons MIC, des signaux sonores reçus par le dispositif ;

- détermination de la valeur moyenne de l'énergie des signaux sonores reçus, dits de bruit ambiant, en l'absence de message ;

- recherche simultanée d'une part, par mesure d'énergie, des échantillons MIC, dits énergiques, dépassant un seuil minimal d'énergie, évolutif, défini en fonction du niveau de bruit ambiant tel que déterminé ci-dessus, d'autre part, par mesure de fréquence, des échantillons MIC, dits de fricatives, correspondants à des signaux de fréquence vocale ;

- détermination du début, du corps et de la fin de toute suite de signaux sonores, susceptible de correspondre à un message potentiel, par prise en compte des suites d'échantillons énergiques et/ou de fricatives éventuellement mêlés d'échantillons de silence, entre deux suites d'échantillons de silence de durées minimales prédéterminées ;

- transcodage des échantillons MIC en mots d'extrema et de silence fournissant chacun, sous forme d'une information numérique, une indication de laps de temps entre deux extrema successifs des signaux sonores reçus ;

- comptabilisation sous forme d'histogrammes, successivement établis pour une succession de fenêtres temporelles de même durée au long d'une suite de signaux reçus considérée comme un éventuel message sonore, des laps de temps entre extrema classés pour chaque fenêtre temporelle en fonction de leurs durées respectives et avec des pas respectifs d'incrémentation correspondants à ces durées ;

- mémorisation temporaire de la forme de référence composée des données binaires correspondant à l'ensemble des histogrammes réalisés pour une suite de signaux reçus considérée comme un éventuel message sonore,

- comparaison dynamique, de la forme de référence temporairement mémorisée d'une suite de signaux reçus avec les formes de référence, prises une à une, des différents messages sonores préalablement mémorisés de manière permanente,

- envoi d'une information numérique de commande, spécifique, à détection d'une identité entre les formes de référence d'un message sonore de commande mémorisé et d'une suite de signaux reçus.

2/ Procédé de commande selon la revendication 1, caractérisé en ce que la mesure de fréquence s'effectue par comptage des changements de signe des échantillons MIC successifs.

3/ Procédé de commande slon la revendication 1, caractérisé en ce que la détermination du début, du corps et de la fin d'un message sonore potentiel s'effectue par la prise en compte, d'une première suite minimale d'échantillons énergiques et/ou de fricatives pendant un premier laps de temps minimal, qui se poursuit par une seconde suite minimale d'échantillons énergiques et/ou de fricatives éventuellement mêlés à des échantillons, dits de silence, dont l'énergie est inférieure au seuil d'énergie courant, l'ensemble formé par ces deux suites étant nécessairement compris entre deux suites d'échantillons de silence de durées minimales prédéterminées.

4/ Procédé de commande selon la revendication 1, caractérisé en ce que les fenêtres temporelles prises en succession pour une suite de signaux reçus se chevauchent partiellement l'une, l'autre.

5/ Procédé de commande selon la revendication 1, caractérisé en ce qu'il implique un apprentissage de chaque message sonore de commande par le dispositif qui reçoit et traite le message sonore, par un processus identique au processus de reconnaissance de toute suite de signaux sonores susceptible de constituer un message, et qui compare ce message reçu avec tout autre message de commande préalablement mémorisé, s'il en existe afin de ne l'accepter que si sa forme de référence est distante de celle desdits autres message préalablement mémorisés.

6/ Procédé de commande selon la revendication 5, permettant un apprentissage multiple d'un même message de commande, caractérisé en ce que, à chacun des apprentissages du même message, on compare les histogrammes obtenus avec les histogrammes correspondants mémorisés au cours des

0203401

apprentissages ultérieurs, de manière à obtenir la forme de référence la plus probable qui est alors mémorisée de manière permanente par action de l'utilisateur.

7/ Procédé de commande selon la revendication 1 pour dispositif (1) de commande par voie sonore d'un appareillage (2) de type poste ou terminal téléphonique à microprocesseur et clavier, caractérisé en ce que le dispositif de commande génère, à destination de l'appareillage et à reconnaissance d'un message sonore de commande mémorisé, une information numérique de commande correspondant à celle à produire au clavier dudit appareillage pour obtenir un processus de commande identique.

8/ Procédé de commande selon la revendication 1, caractérisé en ce qu'il comporte nécessairement au moins deux phases de reconnaissance successives pour l'envoi d'au moins certaines informations numériques de commande, la première phase correspondant à la reconnaissance d'un message clef d'accès nécessaire à l'envoi des informations numériques déterminées par la ou les reconnaissances de messages sonores suivants.

9/ Procédé de commande selon la revendication 1 pour dispositif (1) de commande par voie sonore d'un appareillage (2) de type terminal personnel d'informations à microprocesseur, clavier et écran, caractérisé en ce que les messages sonores de commande mémorisés sont conservés par le dispositif de commande en association avec l'information numérique correspondant à leur forme tabulée sur le clavier de l'appareillage (2).

10/ Dispositif de commande par voie sonore d'un appareillage (2) de type poste ou terminal téléphonique à processeur et clavier, caractérisé en ce qu'il comporte, en un boîtier indépendant ou intégré, un microphone (11) relié à un port d'entrée d'un microprocesseur (15), par l'intermédiaire d'un amplificateur (12) et d'un codeur analogique-numérique (13) piloté par une base de temps (14) pour coder sous forme MIC les signaux sonores reçus du microphone, ledit microprocesseur relié à un ensemble de mémoires (16, 17) vives ou mortes, pour la mémorisation permanente des messages de commande et temporaire des signaux sonores reçus, étant également apte à être relié par une liaison de transmission numérique de données (13) au microprocesseur de l'appareillage commandé.

# FIG. 1

# FIG. 2

4 — MISE EN
MARCHE

5 — SELECTION
DU MODE
D'EXPLOITATION

6 — CONSTITUTION D'UN
REPERTOIRE
D'APPAREIL

7 — EXPLOITATION
MANUELLE DE
L'APPAREIL

8 — CONSTITUTION D'UN
REPERTOIRE DE
COMMANDES VOCALES

9 — EXPLOITATION PAR
COMMANDE
VOCALE

**FIG. 3A**

ACQUISITION DU SIGNAL VOCAL — 8

CALCUL D'ENERGIE — 20

DETECTION DE SILENCE MINIMAL — 21

23 — DETECTION DE SILENCE ETABLI

DETERMINATION DE LA NATURE DU SIGNAL — 22

34 — DETECTION DE SILENCE PROLONGE

25 — PRISE EN COMPTE DE FRICATIVES

PRISE EN COMPTE D'ECHANTILLONS ENERGIQUES — 24

26 — PRESENCE DE FRICATIVES

27 — DETECTION DE DEBUT FRICATIF COURT

DETERMINATION PRESENCE DEBUT MESSAGE — 29

28 — DETECTION DE DEBUT FRICATIF LONG

31 — DETECTION DE DEBUT ENERGIQUE LONG

32 — PRISE EN COMPTE DE SILENCE

DETERMINATION DE DUREE DE SILENCE — 33

30 — TRAITEMENT DE CORPS DE MESSAGE SONORE

4/6    0203401

# FIG. 3B

5/6

0203401

FIG. 4

FIG. 5

FIG. 6

# FIG. 7

Office européen des brevets

**RAPPORT DE RECHERCHE EUROPEENNE**

0203401
Numéro de la demande

EP 86 10 5895

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | THE BELL SYSTEM TECHNICAL JOURNAL, vol. 54, no. 2, février 1975, pages 297-315, American Telephone and Telegraph Co., New York, US; L.R. RABINER et al.: "An algorithm for determining the endpoints of isolated utterances" * Figure 9 * | 1,3 | G 10 L 5/06 |
| X | EP-A-0 125 422 (TEXAS INSTRUMENTS INC.) * Page 7, lignes 1-14 * | 1 | |
| X | IEEE INTERNATIONAL CONFERENCE ON ACOUSTICS, SPEECH AND SIGNAL PROCESSING, Paris, FR, 3-5 mai 1982, vol. 2, pages 879-882, IEEE, New York, US; M. BAUDRY et al.: "A simple and efficient isolated words recognition system" * Pages 879-881, "Temporal coding of the acoustical signal" * | 1 | |
| A | IBM TECHNICAL DISCLOSURE BULLETIN, vol. 12, no. 7, décembre 1969, pages 1121,1122, New York, US; G.L. CLAPPER: "Adaptive assignment of electronic templates to output" * Page 1122, lignes 3-13 * | 5 | DOMAINES TECHNIQUES RECHERCHES (Int. Cl.4) G 10 L 5/06 |

--- -/-

Le présent rapport de recherche a été établi pour toutes les revendications

| Lieu de la recherche | Date d'achèvement de la recherche | Examinateur |
|---|---|---|
| LA HAYE | 25-08-1986 | ARMSPACH J.F.A.M. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | EP-A-0 135 046 (NEC CORP.) <br> * Résumé * | 6 | |
| A | THE JOURNAL OF THE ACOUSTICAL SOCIETY OF AMERICA, vol. 68, no. 5, novembre 1980, pages 1271-1276, Acoustical Society of America, New York, US; L.R. RABINER et al.: "A simplified, robust training procedure for speaker trained, isolated word recognition systems" <br> * Page 1271, colonne de droite, lignes 32-36 * | 6 | |
| A | RADIO FERNSEHEN ELEKTRONIK, vol. 33, no. 8, août 1984, page 477, Berlin, DD; <br> * Page 477, colonne de droite, alinéa 4 * | 8 | |
| A | PROCEEDINGS OF THE IEEE, vol. 72, no. 3, mars 1984, pages 269-282, IEEE, New York, US; J.F. BUCY et al.: "Ease-of-use features in the Texas Instruments Professional Computer" <br> * Paragraphe V, "Speech command system" * | 9 | |

--- -/-

Le présent rapport de recherche a été établi pour toutes les revendications

| Lieu de la recherche <br> LA HAYE | Date d'achèvement de la recherche <br> 25-08-1986 | Examinateur <br> ARMSPACH J.F.A.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

DOMAINES TECHNIQUES RECHERCHES (Int. Cl.4)

OEB Form 1503 03 82

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 348 550 (F.C.PIRZ et al.)<br>* Résumé *<br><br>--- | 10 | |
| A | THE BELL SYSTEM TECHNICAL JOURNAL, vol. 59, no. 7, septembre 1980, pages 1153-1163, American Telephone and Telegraph Co., New York, US; L.R. RABINER et al.: "A voice-controlled, repertory-dialer system"<br>* Résumé *<br><br>----- | 10 | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 25-08-1986 | ARMSPACH J.F.A.M. |